# EUROPÄISCHE PATENTSCHRIFT

(11) **EP 2 006 563 B1**
(45) Veröffentlichungstag und Bekanntmachung des Hinweises auf die Patenterteilung: **10.03.2010**
(21) Anmeldenummer: 08011050.5
(22) Anmeldetag: 18.06.2008
(51) Int. Cl.: F16D 55/28

(54) **Automatische Federspeicherbremse für Flurförderzeug**
Automatic spring brake for industrial trucks
Frein à ressort d'accumulateur automatique pour chariot de manutention

(30) Priorität: 21.06.2007 DE 102007028688
(43) Veröffentlichungstag der Anmeldung: 24.12.2008
(73) Patentinhaber: Jungheinrich Aktiengesellschaft, 22047 Hamburg (DE)
(72) Erfinder: Bögelein, Rolf, 74564 Crailsheim (DE); Zeidler, Christoph, 84032 Landshut (DE)
(74) Vertreter: Trossin, Hans-Jürgen

(56) Entgegenhaltungen:
- EP-A- 0 905 402
- DE-A1-102004 046 346
- US-A1- 2003 051 951

## Beschreibung

Die vorliegende Erfindung betrifft ein Flurförderzeug gemäß dem Oberbegriff von Anspruch 1.

Ein derartiges Flurförderzeug ist beispielsweise aus der EP 1 759 950 A1 bekannt. Flurförderzeuge der eingangs genannten Art sind sie jedoch auch weit verbreitet im Einsatz. Es entspricht den herkömmlichen Sicherheitsvorschriften für Flurförderzeuge, dass diese sowohl eine Betriebsbremse als auch eine Feststellbremse aufweisen müssen. In der genannten Druckschrift kann eine elektrisch betätigte Betriebsbremse auch als Feststellbremse genutzt werden. Weiterhin kann erforderlichenfalls ein mechanisches oder hydraulisches Notbrems- oder Notbetätigungssystem in das Bremssystem integriert sein.

Zum weiteren Stand der Technik wird verwiesen auf die Druckschriften DE 102 59 878 A1, DE 101 50 803 B4, DE 10 2005 043 608 A1, DE 10 2005 005 669 A1, DE 198 31 541 A1, DE 198 10 593 A1 und DE 102 25 038 A1.

Aus Sicherheitsgründen ist es bevorzugt, unterschiedliche Bremssysteme, wie etwa das Betriebsbremssystem und das Feststellbremssystem auf unterschiedlichen physikalischen Wirkprinzipien beruhend zu betätigen, um bei Ausfall eines Systems wenigstens das jeweils andere System weiter nutzen zu können. Dabei ist das besonders vorteilhaft, wenn die Feststellbremse elektrisch betätigbar ist, da dies den Aufwand am Flurförderzeug für Einbau und Wartung der Feststellbremse erheblich reduziert.

Die vorliegende Erfindung geht aus von der EP-A-905 402 als nächstkommender Stand der Technik. Diese offenbart eine Bremseinrichtung mit einer hydraulischen Betriebsbremse und einer elektrisch betätigbaren Feststellbremse. Die der Feststellbremse zugeordnete erste Ankerscheibe und die der Betriebsbremse zugeordnete zweite Ankerscheibe sind axial benachbart in der Bremseinrichtung vorgesehen. Die EP-A-905 402 schlägt vor, eine nicht-metallische Lage auf der vom Elektromagneten wegweisenden Seite der ersten Ankerscheibe anzuordnen, um so den axialen Abstand zwischen den beiden ferromagnetischen Ankerscheiben zu vergrößern.

Nachteilig ist die noch vorhandene elektromagnetische Rückwirkung der Feststellbremse auch auf die der Betriebsbremse zugeordnete zweite Ankerscheibe.

Die Aufgabe der vorliegenden Erfindung ist, einen Einfluss der elektromagnetisch betätigbaren Feststellbremse auf die mechanisch oder/und pneumatisch oder/und hydraulisch betätigbare Betriebsbremse im Betrieb des mit einer derartigen Bremseinrichtung ausgestatteten Flurförderzeugs weiter zu reduzieren oder gar zu vermeiden, wobei die kompakte Bauweise einer derartigen Bremseinrichtung beibehalten werden soll.

Diese Aufgabe wird gelöst durch ein Flurförderzeug mit allen Merkmalen des neuen Anspruchs 1.

Gemäß der vorliegenden Erfindung ist konstruktiv vorgesehen, dass das Flurförderzeug eine der Feststellbremse zugeordnete erste Ankerscheibe mit ferromagnetischem Material umfasst, welche bewegbar ist zwischen einer Aktivstellung, in welcher sie die Bremskrafterzeugungs- und Bremskraftübertragungsvorrichtung zur Erzeugung und Übertragung einer Bremskraft auf das wenigstens eine Rad aktiviert, und einer Inaktivstellung, in welcher sie die Bremskrafterzeugungs- und Bremskraftübertragungsvorrichtung nicht aktiviert. Die erste Ankerscheibe kann nur lokal ferromagnetisches Material aufweisen, weist bevorzugt überwiegend ferromagnetisches Material auf und ist besonders bevorzugt im Wesentlichen vollständig aus ferromagnetischem Material gefertigt.

Ein weiterer Vorteil des erfindungsgemäßen Flurförderzeugs ist, dass die oben beschriebene Bremsfunktion in einer einzigen Bremseinheit verwirklicht sein kann, welche als trockenlaufende Bremseinheit ausgeführt sein kann. Eine derart ausgestattete Bremseinheit kann vorteilhaft direkt an den Motor angeflanscht sein, etwa derart, dass der Motor zwischen zwei Lagerschilden eingebaut ist, wobei an einem Lagerschild des Motors ein Getriebe und am entgegengesetzten Lagerschild des Motors die Bremseinheit angeflanscht ist. Derartige trockenlaufende Bremsen verursachen weniger Verluste, insbesondere keine Planschverluste, so dass sie mit einem höheren Wirkungsgrad betrieben werden können. Gleichzeitig entfällt der ansonsten regelmäßig notwendige Austausch des Öls, so dass die Intervalle zu regelmäßigen Wartung im Vergleich zu nasslaufenden Bremsen verlängert sein können.

Als "Bremskrafterzeugungs- und Bremskraftübertragungsvorrichtung" kommt jegliche Vorrichtung infrage, welche geeignet ist, eine Bremskraft zu erzeugen und zu einem Rad zu übertragen. Dies kann eine Magnetanordnung einer Wirbelstrombremse sein, welche jedoch kein Abbremsen auf eine Geschwindigkeit von Null gestattet, ist bevorzugt wenigstens eine zwischen Reibbelägen laufende und mit dem Rad drehmomentübertragungsmäßig verbundene Bremsscheibe. Ebenso kann ein an sich bekanntes Bremslamellenpaket mit in axialer Richtung abwechselnd angeordneten ortsfesten und drehbaren Bremslamellen als die "Bremskrafterzeugungs- und Bremskraftübertragungsvorrichtung" verwendet werden.

Eine besonders Platz sparende und montagefreundliche Bauweise der im Flurförderzeug vorgesehenen Bremseinheit kann dadurch erhalten werden, dass ein und dieselbe Bremskrafterzeugungs- und Bremskraftübertragungsvorrichtung sowohl der Betriebsbremse als auch der Feststellbremse derart zugeordnet ist, dass sowohl eine Betätigung der Betriebsbremse als auch eine Betätigung der Feststellbremse die Bremskrafterzeugungs- und Bremskraftübertragungsvorrichtung zur Erzeugung und Übertragung einer Bremskraft auf das wenigstens eine Rad aktiviert. Wie oben bereits dargelegt wurde ist es aus Gründen der Betriebssicherheit bevorzugt, wenn die Bremskrafterzeugungs- und Bremskraftübertragungsvorrichtung die auf ein Rad übertragbare Bremskraft kraftschlüssig, insbesondere reibschlüssig, erzeugt. Derartige Bremskrafterzeugungs- und Bremskraftübertragungsvorrichtungen haben sich in einer Vielzahl von Anwendungen bewährt und gestatten das vollständige und schnelle Abbremsen des Flurförderzeugs bis zum Stillstand ebenso wie das Feststellen des stillstehenden Flurförderzeugs.

Um zu gewährleisten, dass das Flurförderzeug bei einem Ausfall der Stromversorgung sicher festgestellt ist, kann vorgesehen sein, dass das Flurförderzeug eine Feststell-Vorspanneinrichtung umfasst, welche auf die erste Ankerscheibe eine diese zur Aktivstellung hin vorspannende Feststell-Vorspannkraft ausübt. In diesem Falle kann ein elektrisch betätigbarer Aktuator, insbesondere ein bestromter Elektromagnet, die erste Ankerscheibe in der Inaktivstellung halten. Dann, wenn die Bestromung des elektrisch betätigbaren Aktuators endet, endet auch die Kraftwirkung desselben, so dass die Feststell-Vorspannkraft nicht mehr durch die Kraft des Aktuators kompensiert ist und so die erste Ankerscheibe in die Aktivstellung bewegen kann.

Die Feststell-Vorspanneinrichtung kann in einem konstruktiv besonders einfachen und daher bevorzugten Fall wenigstens eine Druckfeder umfassen, welche die oben genannte Feststell-Vorspannkraft ausübt. Zur Erhöhung der Feststell-Vorspannkraft ist es bevorzugt, eine Mehrzahl von Druckfedern vorzusehen. Eine besonders gezielte Krafteinleitung ist mit Schraubendruckfedern möglich. Um die Feststell-Vorspannkraft möglichst gleichmäßig und symmetrisch in die erste Ankerscheibe einleiten zu können, und damit unerwünschtes Verklemmen der ersten Ankerscheibe zu vermeiden, ist weiterhin bevorzugt, die Mehrzahl von Druckfedern äquidistant anzuordnen, insbesondere längs einer Umfangsrichtung der Ankerscheibe.

Um zu verhindern, dass die Betriebsbremsfunktion durch den zuvor genannten bevorzugten Elektromagneten beeinflusst wird, ist zur Erzielung einer Bremswirkung der Betriebsbremse vorgesehen, dass es eine der Betriebsbremse zugeordnete nicht-ferromagnetische zweite Ankerscheibe umfasst, welche verlagerbar ist zwischen einer Ineingriffsstellung, in welcher sie die Bremskrafterzeugungs- und Bremskraftübertragungsvorrichtung zur Erzeugung und Übertragung einer Bremskraft auf das wenigstens eine Rad aktiviert, und einer Außereingriffsstellung, in welcher sie die Bremskrafterzeugungs- und Bremskraftübertragungsvorrichtung nicht aktiviert. Die zweite Ankerscheibe kann aufgrund ihrer nicht-ferromagnetischen Eigenschaften verlagert werden, ohne dass bei dieser Verlagerung eine von dem der Feststellbremse zugeordneten Elektromagneten ausgehende Kraft überwunden werden müsste. Dadurch reicht eine kleine, eine verhältnismäßig geringe Betätigungskraft bereitstellende Betätigungseinrichtung zur Verlagerung der zweiten Ankerscheibe aus.

Die in dem Flurförderzeug vorgesehene Bremseinheit kommt dann mit sehr wenig Bauraum aus, wenn die erste und die zweite Ankerscheibe längs einer gemeinsamen Trajektorie bewegbar beziehungsweise verlagerbar sind, vorzugsweise koaxial angeordnet sind und längs der gemeinsamen Achse bewegbar beziehungsweise verlagerbar sind.

Da die Betriebsbremse in der Regel wesentlich häufiger betätigt wird als die Feststellbremse ist es zweckmäßig, Elemente der Betriebsbremse derart auszuführen und anzuordnen, dass die Betriebsbremse unabhängig von der Feststellbremse und insbesondere unabhängig von Bewegungen von der Feststellbremse zugeordneten Bauteilen betätigbar ist. Dies kann beispielsweise dadurch erreicht werden, dass die zweite Ankerscheibe bei Betrachtung in Richtung der gemeinsamen Bewegungstrajektorie zwischen der Bremskrafterzeugungs- und Bremskraftübertragungsvorrichtung und der ersten Ankerscheibe angeordnet ist. Außerdem kann bei einer derartigen Anordnung die erste Ankerscheibe sehr nahe, also ohne Zwischenanordnung der zweiten Ankerscheibe, bei dem Elektromagneten angeordnet sein, welcher mit der ersten Ankerscheibe wechselwirkt.

Demgegenüber wird die Feststellbremse in der Regel dann betätigt, wenn das Flurförderzeug ohnehin stillsteht, so dass eine Mitbetätigung einzelner der Betriebsbremse zugeordneter Bauteile bei Betätigung der Feststellbremse nicht stört. Somit kann eine Anordnung vorgesehen werden, bei welcher die erste Ankerscheibe bei ihrer Bewegung von der Inaktivstellung in die Aktivstellung die zweite Ankerscheibe von der Außereingriffsstellung zu der Ineingriffsstellung hin verlagert, vorzugsweise in die Ineingriffsstellung verlagert. Dadurch kann außerdem stets das gleiche Bremsenbauteil, hier: die zweite Ankerscheibe, mit der Bremskrafterzeugungs- und Bremskraftübertragungsvorrichtung zusammenwirken, so dass die Bremseinheit vorteilhaft eine geringe Anzahl von mit Verschleiß belasteten Bauteilen umfasst. Dabei können beim Bremsen unerwünschtes Spiel sowie unerwünschte Totbewegungen verhindert werden, indem die zweite Ankerscheibe dann, wenn sie sich in ihrer Außereingriffsstellung befindet, an der ersten Ankerscheibe anliegt.

Um sicherzustellen, dass auf das Flurförderzeug im normalen Fahrbetrieb ohne Bremsbetätigung keine Rest-Bremskraft wirkt, kann vorgesehen sein, das das Flurförderzeug eine Betriebs-Vorspanneinrichtung umfasst, welche auf die zweite Ankerscheibe eine diese zur Außereingriffsstellung hin vorspannende Betriebs-Vorspannkraft ausübt. In dem oben beschriebenen bevorzugten Fall, dass die erste und zweite Ankerscheibe längs einer gemeinsamen Trajektorie bewegbar sind, kann die Betriebs-Vorspanneinrichtung an der ersten Ankerscheibe abgestützt sein. In diesem Falle wirkt die auf die zweite Ankerscheibe wirkende Betriebs-Vorspannkraft auf die erste Ankerscheibe als Abstützkraft in Richtung zu deren Aktivstellung hin. Durch diese Anordnung kann beim Lösen der Feststellbremse, also bei Bewegung der ersten Ankerscheibe von der Aktivstellung in die Inaktivstellung auf sehr einfache Weise ohne zusätzlichen Aktuator die zweite Ankerscheibe von der Eingriffsstellung in die Außereingriffsstellung verlagert werden. Besonders einfach und Platz sparend kann die Betriebs-Vorspanneinrichtung eine Wellfeder umfassen.

Weiterhin kann gewünscht sein, die Bremseinheit im Falle ihrer Fehlfunktion durch Angriff von außen von Hand lüften zu können. Hierzu kann das Flurförderzeug eine Notlüftungsvorrichtung umfassen, mit welcher zumindest die Feststellbremse manuell gelüftet werden kann.

Konstruktiv besonders einfach und sicher kann die Notlüftungsvorrichtung formschlüssig mit der ersten Ankerscheibe in Eingriff sein. Beispielsweise kann die Notlüftungsvorrichtung eine die erste Ankerscheibe durchsetzende und hintergreifende Stelleinrichtung umfassen, durch welche die erste Ankerscheibe zumindest von der Aktivstellung in die Inaktivstellung bewegbar ist. Die Stelleinrichtung kann von bloßer Hand oder durch ein Werkzeug betätigbar sein. In der Regel ist die Bremseinheit mit der Betriebsbremse und der Feststellbremse, oder wenigstens einer Vielzahl von diesen zugeordneten Bauteilen, in einem Bremsgehäuse aufgenommen. In diesem Falle ist es zur Verminderung des Betätigungsaufwands besonders vorteilhaft, wenn die Stelleinrichtung von außerhalb des Bremsgehäuses, in welchem wenigstens die erste Ankerscheibe aufgenommen ist, betätigbar ist.

Wie oben bereits beschrieben wurde, kann die Bremskrafterzeugungs- und Bremskraftübertragungsvorrichtung eine bezogen auf ein die Betriebsbremse und die Feststellbremse aufnehmendes Bremsgehäuse ortsfeste Bremsplatte und wenigstens eine relativ zu dieser bewegliche Bremslamelle umfassen, bevorzugt mit einem an der Bremsplatte oder/und an der wenigstens einen Bremslamelle vorgesehenen Bremsbelag. In diesem Falle kann eine Bremskraft der Betriebsbremse sehr einfach dadurch bereitgestellt werden, dass die zweite Ankerscheibe in ihrer Ineingriffsstellung die wenigstens eine Bremslamelle gegen die ortsfeste Bremsplatte drückt.

Die von Bremsplatte, Bremslamelle und zweiter Ankerscheibe erzeugte oder erzeugbare Bremswirkung kann gemäß einer vorteilhaften Weiterbildung der vorliegenden Erfindung noch dadurch erhöht werden, dass die zweite Ankerscheibe auf ihrer zur Bremslamelle hin weisenden Seite mit einem Bremsbelag versehen ist. Der Bremsbelag kann ein- oder mehrteilig ausgeführt sein.

Die Bremsplatte kann gemäß einer ersten möglichen Ausführungsform der vorliegenden Erfindung am Bremsgehäuse vorgesehen sein. Hierzu kann die Bremsplatte entweder integral an einem Bremsgehäuseteil ausgebildet oder als gesondertes Bauteil mit einem Bremsgehäuseabschnitt fest verbunden sein. Gemäß einer weiteren alternativen Ausführungsform kann die Bremsplatte auch an einem Antriebsmotor des Flurförderzeugs vorgesehen sein. Auch hier gilt, dass die Bremsplatte integral an dem Antriebsmotor, etwa dem Motorgehäuse oder einem Motorgehäuseabschnitt, ausgebildet oder als gesondertes Bauteil fest mit dem Antriebsmotor verbunden sein kann. Besonders bevorzugt ist die Bremsplatte dann, wenn der Antriebsmotor ein Stahlgehäuse aufweist, integral als Abschnitt des Antriebsmotors ausgebildet, etwa als ein sogenanntes Lagerschild (B-Lagerschild).

Um zu verhindern, dass durch besonders heftiges Betätigen der Betriebsbremse ein Schaden in der Bremseinrichtung entsteht, kann vorgesehen sein, dass wenigstens das durch die Betriebsbremse ausübbare Bremsmoment durch eine Überlastsicherung gegen ein Ausüben betragsmäßig übermäßig hoher Bremsmomente begrenzt ist.

Die Anmelderin behält sich das Recht vor, ganz allgemein gesonderten Schutz zu beanspruchen für ein Flurförderzeug mit wenigstens einem angetriebenen Rad, welches im Fahrbetrieb durch eine Betriebsbremse bremsbar ist und welches durch eine Feststellbremse feststellbar ist, wobei das Flurförderzeug eine Bremskrafterzeugungs- und Bremskraftübertragungsvorrichtung umfasst, mit welcher eine Bremskraft erzeugbar und auf wenigstens ein Rad, vorzugsweise ein angetriebenes Rad, übertragbar ist, wobei die Betriebsbremse mechanisch oder/und pneumatisch oder/und hydraulisch betätigbar ist und die Feststellbremse elektrisch, insbesondere elektromagnetisch, betätigbar ist, dadurch gekennzeichnet, dass wenigstens das durch die Betriebsbremse ausübbare Bremsmoment durch eine Überlastsicherung betragsmäßig gegen übermäßig hohe Bremsmomente begrenzt ist.

Dabei kann das Flurförderzeug zur Betätigung der Betriebsbremse ein von einem Flurförderzeugführer zu betätigendes Betätigungselement aufweisen, durch welches ein mit der zweiten Ankerscheibe in Kraftübertragungskopplung stehendes Aktuatorelement von einer Nichtbetätigungsstellung hin zu einer Betätigungsstellung verstellbar ist. In diesem Falle kann mit besonders einfachen konstruktiven Maßnahmen der Überlastschutz der Betriebsbremse erreicht werden, indem die Überlastsicherung eine Feder umfasst, welche kraftübertragungsmäßig zwischen dem Aktuatorelement und der zweiten Ankerscheibe angeordnet ist. Außerdem kann vorgesehen sein, dass das Betätigungselement einen begrenzten Betätigungsbereich oder/und das Aktuatorelement einen begrenzten Verstellbereich aufweist, so dass auch die mit Überlastsicherung maximal erreichbare Bremskraft sicher vorbestimmt werden kann. Der Betätigungsbereich ist dabei eben nicht durch das Anliegen von Bremselementen, wie der oben beschriebenen Bremslamelle und der zweiten Ankerscheibe, aneinander begrenzt, sondern ist unabhängig vom Zustand eventuell vorhandener Verschleißteile in der Bremse vorbestimmt und begrenzt.

Die vorliegende Erfindung wird im folgenden anhand eines Ausführungsbeispiels näher erläutert. Es stellt dar:
- Fig. 1: eine schematische Längsschnittansicht einer Bremseinrichtung, wie sie in einem erfindungsgemäßen Flurförderzeug eingebaut sein kann,
- Fig. 2: eine Detailansicht einer Notlüftungsvorrichtung der in Fig. 1 gezeigten Bremseinrichtung,
- Fig. 3: eine Seitenansicht eines erfindungsgemäßen Flurförderzeugs,
- Fig. 4: eine Detailansicht des Flurförderzeugs von Fig. 3 mit der in Fig. 1 gezeigten Bremseinrichtung und
- Fig. 5: eine weitere Detailansicht des in den Figuren 3 und 4 gezeigten Flurförderzeugs, wobei das mit der Bremseinrichtung der Fig. 1 gekoppelte Bremspedal zu sehen ist.

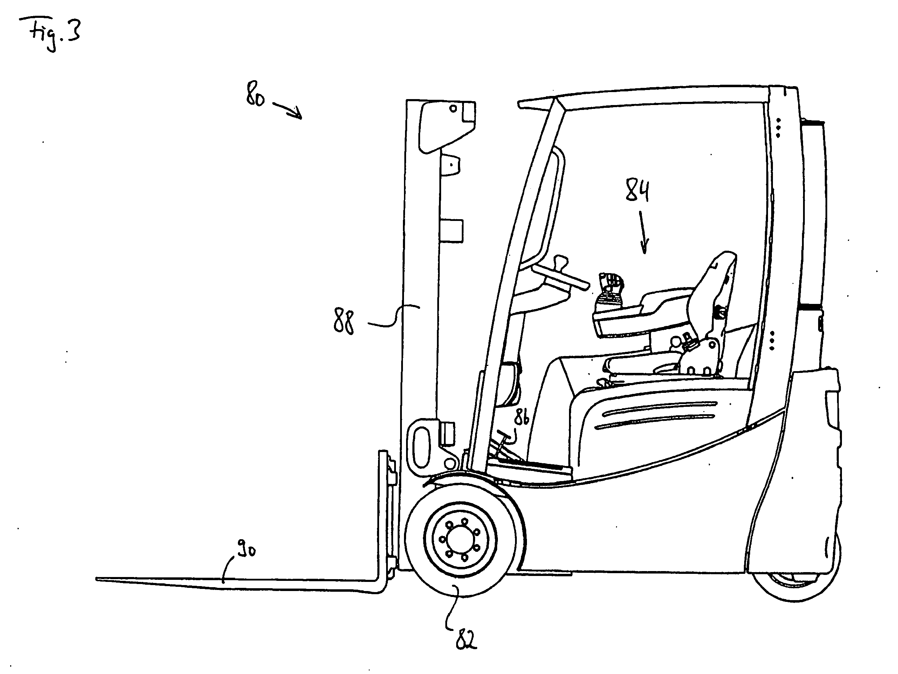

In Fig. 3 ist ein Flurförderzeug in Form eines Gabelstaplers allgemein mit 80 bezeichnet. In Fig. 3 ist überdies ein angetriebenes Rad 82 zu erkennen, welches von Fahrerplatz 84 aus durch ein Fußpedal 86 bremsbar ist.

Zu erkennen ist in Fig. 3 überdies der Hubmast 88, an welchem eine Gabel 90 höhenverstellbar vorgesehen ist.

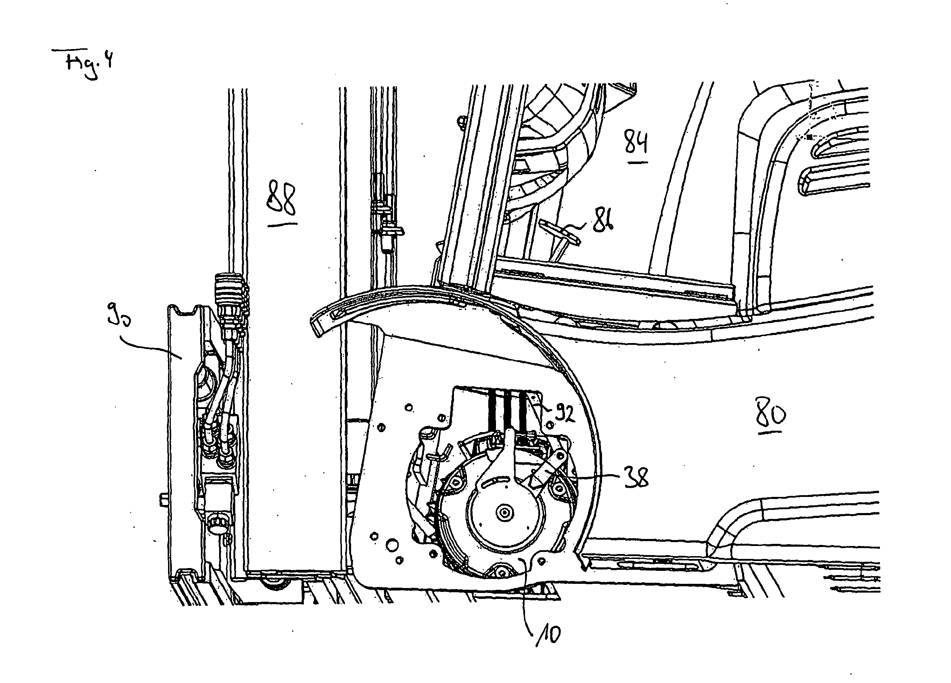

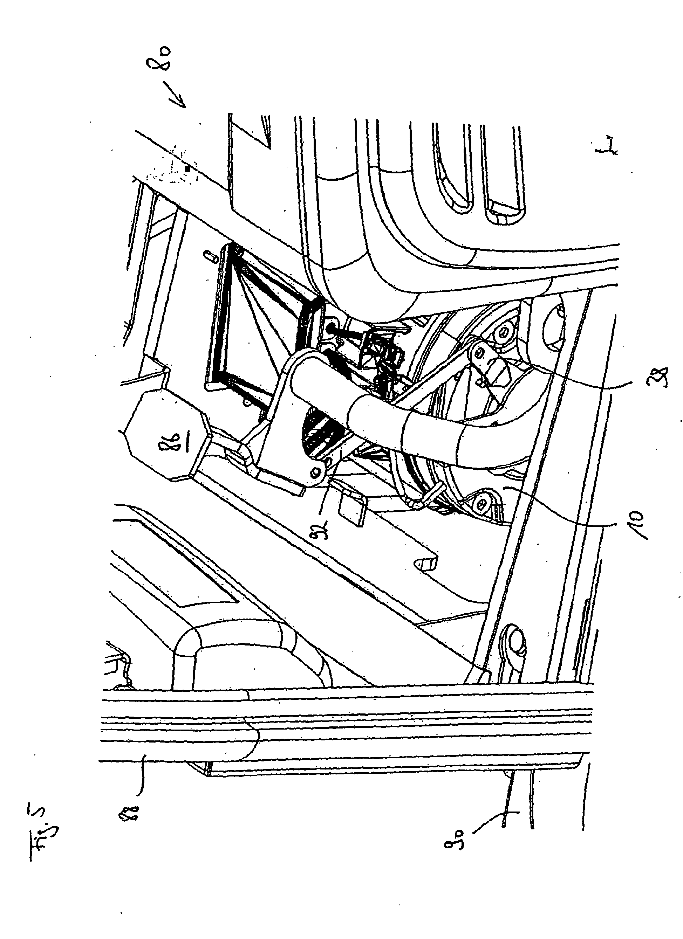

In Fig. 4 ist der Gabelstapler 80 dargestellt, wobei das Rad 82 und die diesem zugeordnete Bremseinheit abgenommen sind, so dass der Blick freigegeben ist auf die weiter unten näher beschriebene Bremseinheit 10, die mit dem dem Rad 82 gegenüberliegenden Vorderrad des Gabelstaplers 80 verbunden ist und deren Betätigungshebel 38, wie auch in Fig. 5 dargestellt ist, über ein Gestänge 92 mit dem Fußpedal 86 zur Betätigung der Bremseinheit 10 verbunden ist.

Der Betätigungshebel 38 betätigt als gemeinsamer zentraler Betätigungshebel sowohl die Bremseinheit 10 als auch die nicht dargestellte Bremseinheit des Rades 82.

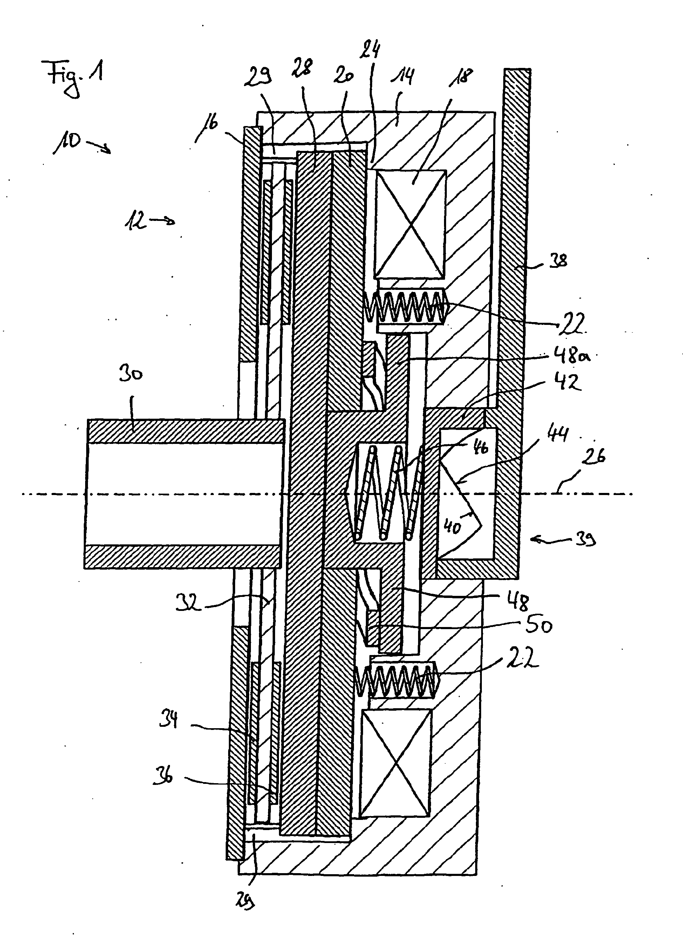

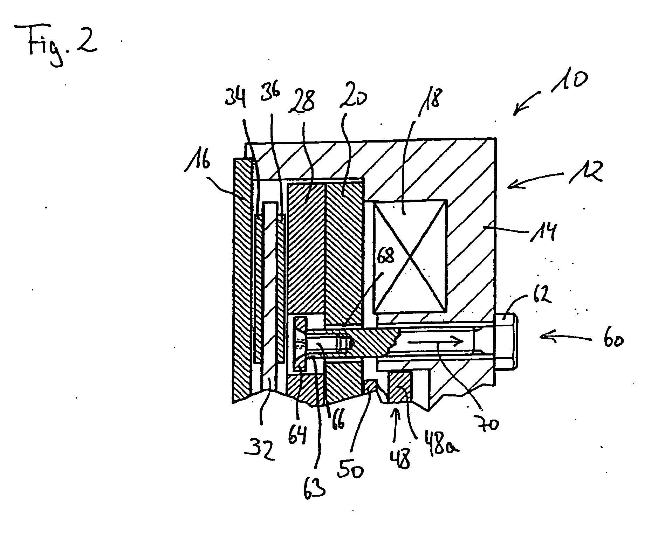

In Fig. 1 ist eine Bremseinheit für ein Flurförderzeug allgemein mit 10 bezeichnet. Die Bremseinheit 10 eines in den Figuren 1 und 2 nicht dargestellten Flurförderzeugs umfasst ein Bremsgehäuse 12 mit einem Gehäusekörper 14 und einer an diesem angebrachten Druckplatte 16.

In dem Bremsgehäuse 12 ist ein Elektromagnet 18 aufgenommen, welcher im bestromten Zustand eine erste ferromagnetische Ankerscheibe 20 gegen die Wirkung von Feststell-Vorspannfedern 22 gegen einen umlaufenden Vorsprung 24 des Gehäusekörpers 14 anzieht.

In Fig. 1 ist die erste Ankerscheibe 20 in ihrer Inaktivstellung dargestellt, das heißt die Ankerscheibe 20 liegt am umlaufenden Vorsprung 24 an und der Elektromagnet 18 ist bestromt.

Die Feststell-Vorspannfedern 22 sind Schraubendruckfedern, welche um die zentrale Achse 26 der Bremseinrichtung 10 herum mit gleichem Winkelabstand voneinander angeordnet sind. Dadurch kann eine symmetrische Vorspannkraft auf die erste Ankerscheibe 20 hin ausgeübt werden, welche die erste Ankerscheibe 20 zu der Druckplatte 16 hin vorspannt.

An der zur Druckplatte 16 weisenden Stirnseite der ersten Ankerscheibe 20 liegt eine zweite nicht-ferromagnetische Ankerscheibe 28 an. Während die erste Ankerscheibe 20 der Feststellbremse beziehungsweise einer Feststellbremsfunktion zugeordnet ist, ist die zweite Ankerscheibe 28 der Betriebsbremse beziehungsweise einer Betriebsbremsfunktion zugeordnet.

Die erste und die zweite Ankerscheibe 20 beziehungsweise 28 sind beide längs der zentralen Achse 26 der Bremseinheit 10 bewegbar. In Fig. 1 ist die zweite Ankerscheibe 28 in ihrer Außereingriffsstellung gezeigt. Beide Ankerscheiben sind an Radialvorsprüngen 29 zu ihrer axialen Bewegung geführt. Die Radialvorsprünge 29, welche integral am Gehäusekörper 14 ausgebildet sind, greifen in in Fig. 1 nicht dargestellte Führungsnuten der Ankerscheiben 20 und 28 ein.

In axialer Richtung zwischen der Druckplatte 16 und der zweiten Ankerscheibe 28 ist eine zur gemeinsamen Drehung mit einer Nabe 30 verbundene aber relativ zu dieser axial bewegliche Bremsscheibe 32 angeordnet, welche auf ihren zwei in entgegengesetzte Richtungen weisenden Stirnflächen umlaufende Bremsbeläge 34 beziehungsweise 36 trägt. Die Nabe 30 ist, gegebenenfalls unter Zwischenanordnung eines Getriebes, mit einem nicht dargestellten angetriebenen Rad des Flurförderzeugs Drehmoment übertragend verbunden.

In dem Gehäusekörper 14 ist ein Betätigungshebel 38 um die zentrale Achse 26 drehbar aber axial unbeweglich aufgenommen. Der Betätigungshebel 38 weist an seinem in das Bremsgehäuse 12 einragenden Ende 39 einen zylindrischen Eingriffsabschnitt mit gezackter Stirnflächenkontur 40 auf. Genauer ist die Abwicklung der Kontur 40 in einer Ebene eine Zickzacklinie mit drei Spitzen und drei Tälern. Die Spitzen und die Täler haben jeweils einen Abstand von ca. 120° voneinander. Eine Spitze ist vom nächstgelegenen Tal in Umfangsrichtung ca. 60° entfernt. In der Abwicklung betrachtet, sind unmittelbar benachbarte Spitzen und Täler in dem in Fig. 1 gezeigten Beispiel durch ebene Flächen verbunden.

Das Ende 39 des Betätigungshebel 38 wirkt mit einem ersten Aktuatorteil 42 zusammen, welches in dem Gehäusekörper 14 axial verlagerbar, jedoch drehfest aufgenommen ist. Das erste Aktuatorteil 42 weist eine zur Kontur 40 des Endes 39 komplementäre Gegenkontur 44 auf. Bei Drehung des Betätigungshebels 38 um die Achse 26 kommt es zu einer Relativbewegung der Konturen 40 und 44 aneinander, wodurch ausgehend von der Fig. 1 gezeigten Stellung das erste Aktuatorteil 42 in axialer Richtung zu den Ankerscheiben 20 beziehungsweise 28 hin bewegt wird.

Dadurch wird eine zunächst entspannte Überlastfeder 46, welche einenends am ersten Aktuatorteil 42 und andernends an einem zweiten Aktuatorteil 48 abgestützt ist, zusammengedrückt, so dass die Überlastfeder 46 mit zunehmender axialer Verlagerung des ersten Aktuatorteils 42 eine zunehmende axiale Druckkraft auf das zweite Aktuatorteil 48 ausübt.

Das zweite Aktuatorteil 48 ist fest mit der zweiten Ankerscheibe 28 zur gemeinsamen axialen Bewegung verbunden. Zwischen einem Ringbund 48a und einem radial inneren Abschnitt der ersten Ankerscheibe 20 ist eine Wellfeder 50 vorgesehen, welche den Ringbund 48a von der ersten Ankerscheibe 20 weg und damit die zweite Ankerscheibe 28 zur ersten Ankerscheibe 20 hin vorspannt. Dann, wenn die von der Überlastfeder 46 auf das zweite Aktuatorteil 48 ausgeübte Druckkraft aufgrund der Verlagerung des ersten Aktuatorteils 42 die von der Wellfeder auf das zweite Aktuatorteil 48 in entgegengesetzter Richtung ausgeübte Vorspannkraft übersteigt, beginnt sich das drehfest aber axial beweglich im Bremsgehäuse 12 aufgenommene zweite Aktuatorteil 48 allmählich in Richtung der Druckkraft, also zur Bremsscheibe 32 hin zu bewegen. Dadurch gelangt die zweite Ankerscheibe 28 in Anlage an den Bremsbelag 36 und verlagert die Bremsscheibe 32 in axialer Richtung, bis der Bremsbelag 34 an der Druckplatte 16 anliegt. Die Bremsscheibe 32 mit ihren Bremsbelägen 34 und 36 wird so zwischen der Druckplatte 16 und der zweiten Ankerscheibe 28 abhängig vom Ausmaß der Betätigung des Betätigungshebels 38 eingeklemmt, wobei die an den Bremsbelägen 34 und 36 auftretende Reibkraft (Bremskraft) durch die Betätigung des Betätigungshebels 38 dosierbar ist.

Die Überlastfeder 46 sowie die Eingriffskonturen 40 und 44 sorgen dabei für eine Begrenzung der maximal erreichbaren Bremskraft. Diese ist bestimmt durch die aufgrund der Konturen 40 und 44 maximal erzielbare axiale Verlagerbarkeit des ersten Aktuatorteils 42 sowie durch die Federhärte der Überlastfeder 46.

Ist ein vollständiges Feststellen des Flurförderzeugs gewünscht, so wird durch eine entsprechende Betätigung des Flurförderzeugführers die Bestromung des Elektromagneten 18 abgeschaltet, so dass dessen Kraftwirkung auf die erste Ankerscheibe 20 endet. Dadurch entfällt die die Vorspannkraft der Feststell-Vorspannfedern 22 kompensierende Kraft, wodurch die Feststell-Vorspannfedern 22 die erste Ankerscheibe 20 und mit dieser die zweite Ankerscheibe 22 in Fig. 1 nach links bewegen, bis wiederum die Bremsscheibe 32 mit den daran vorhandenen Bremsbelägen 34 und 36 unter Ausübung einer vorbestimmten Feststellkraft zwischen der Druckplatte 16 und der zweiten Ankerscheibe 28 eingeklemmt wird.

Die Feststellbremse beziehungsweise Feststellbremsfunktion wird durch erneutes Bestromen des Elektromagneten 18 gelöst, dessen Anziehungskraft auf die erste Ankerscheibe 20 größer ist als die von den Feststell-Vorspannfedern 22 ausgeübte Kraft. Aufgrund der Anordnung der Wellfeder 50 zwischen dem zweiten Aktuatorteil 48 und der ersten Ankerscheibe 20 führt das Anziehen der ersten Ankerscheibe 20 durch den Elektromagneten 18 an den umlaufenden Vorsprung 24 auch zu einer Bewegung der zweiten Ankerscheibe 28 von der Bremsscheibe 32 weg und hin zum Elektromagneten 18, so dass die Wirkung der Feststellbremse vollständig aufgehoben werden kann.

Das Lösen der Betriebsbremse erfolgt durch einfaches Beenden der Betätigung des Betätigungshebels 38. Die bei Betätigung der Betriebsbremse komprimierte Wellfeder 50 stellt nach Beenden der Betätigung des Betätigungshebels 38 die zweite Ankerscheibe 28 über das zweite Aktuatorteil 48 in die in Fig. 1 gezeigte Außereingriffsstellung zurück, wobei auch das Aktuatorteil 42 durch die im Betätigungszustand komprimierte Überlastfeder 46 in Fig. 1 gezeigte Stellung zurückkehrt. Der Betätigungshebel 38 ist üblicherweise in die in Fig. 1 gezeigte Stellung vorspannt.

Es ist dem Fachmann ohne weiteres verständlich, dass die Feststell-Vorspannfedern 22 in ihrer Federhärte auf die gewünschte Feststellkraft und den vorhandenen Feststell-Bewegungsweg ausgelegt sein müssen. Anhand der Federhärte der Feststell-Vorspannfedern 22 und ihrer Anzahl ist dann der Elektromagnet 18 zu dimensionieren.

Außerdem sind die Federhärten der Überlastfeder 46 einerseits und der Wellfeder 50 andererseits unter Berücksichtigung der diesen Federn jeweils zugeordneten Verformung aufeinander abzustimmen. In dem in Fig. 1 gezeigten Beispiel ist die Federhärte der Überlastfeder 46 deutlich höher zu wählen als jene der Wellfeder 50.

In Fig. 2 ist eine Detailansicht einer Notlüftungsvorrichtung der in Fig. 1 gezeigten Bremseinheit dargestellt. Die Fig. 2 zeigt den radial äußeren Bereich eines Längsschnitts, welcher wie der Längsschnitt von Fig. 1 die zentrale Achse 26 der Bremseinheit 10 enthält. Die Schnittebene der Fig. 2 liegt jedoch bezüglich jener der Fig. 1 um einen Winkel um die zentrale Achse 26 verdreht.

In Fig. 2 ist etwa auf der radialen Position der Feststell-Vorspannfedern 22 von Fig. 1 eine Notlüftungsvorrichtung dargestellt, welche allgemein mit 60 bezeichnet ist. Diese Notlüftungsvorrichtung 60 umfasst eine den Gehäusekörper 14 durchsetzende erste Schraube 62, welche die erste Ankerscheibe 20 durchsetzt.

An ihrem vom Schraubenkopf entfernt gelegenen Längsende 63 ist eine Sicherungsplatte 64 durch eine Halteschraube 66 an dem Längsende 63 der Schraube 62 gehalten. Die Halteschraube 66 und die Schraube 62 sind koaxial angeordnet, das heißt die Halteschraube 66 ist in den Schaft der Schraube 62 koaxial eingedreht.

Durch den an der Halteschraube 66 vorgesehenen Kegelsenkkopf ist die Sicherungsplatte 64 spielfrei mit dem Längsende 63 der Schraube 62 verbunden. Die Abmessung der Sicherungsplatte 64 in radialer Richtung bezogen auf die zentrale Achse 26 der Bremseinheit 10 ist derart gewählt, dass die von der Schraube 62 durchsetzte Öffnung 68 der ersten Ankerscheibe 20 von der mit der Sicherungsplatte 64 versehenen Schraube 62 hintergriffen ist, das heißt die radiale Abmessung der Sicherungsplatte 64 ist größer als der Durchmesser der Öffnung 68.

In Fig. 2 ist erste Ankerscheibe 20 in ihrer Inaktivstellung gezeigt, wobei sie mit einem axialen Abstand von der Sicherungsplatte 64 angeordnet ist, welcher größer ist als der axiale Bewegungsweg der ersten Ankerscheibe 20 von der Inaktivstellung in die Aktivstellung, so dass die Notlüftungsvorrichtung 60 durch die betriebsübliche Bewegung der ersten Ankerscheibe 20 nicht beeinflusst ist.

Es kann darüber hinaus vorgesehen sein, die Notlüftungsvorrichtung 60 in die Fig. 2 gezeigte Stellung vorzuspannen, etwa durch eine nicht dargestellte zwischen der Sicherungsplatte 64 und der ersten Ankerscheibe 20 vorgesehene Feder. Diese Feder kann als Schraubendruckfeder den Schaft der Schraube 62 im Bereich des Längsendes 63 umgeben. Die Schraube 62 und insbesondere ihr Schraubenkopf stellen eine Stelleinrichtung der Notlüftungsvorrichtung 60 im Sinne der vorliegenden Anmeldung dar.

Durch Bewegen der Schraube 62 in Richtung des Pfeils 70 kann eine sich unerwünschterweise in der Aktivstellung befindende erste Ankerscheibe 20 von außerhalb des Bremsgehäuses 12 in die Inaktivstellung bewegt werden. Ein derartiges Bewegen der Schraube 62 geschieht vorteilhafterweise unter Verwendung eines Werkzeugs, etwa eines Gabelkeils, welcher zwischen den Schraubenkopf der Schraube 62 und der als Anlagefläche für diesen dienenden Außenfläche des Gehäusekörpers 14 getrieben wird. Somit kann die Feststellbremsfunktion der Bremseinheit 10 im Falle eines unerwünschten Stromausfalls aufgehoben werden.

Alternativ zu der dargestellten Ausführungsform der Notlüftungsvorrichtung kann diese auch wie folgt ausgebildet sein: Falls es der vorhandene Bauraum zulässt, kann die erste Ankerscheibe 20 derart ausgebildet sein, dass sie in wenigstens einem Umfangsabschnitt, vorzugsweise in mehreren Umfangsabschnitten, gegebenenfalls. längs ihres gesamten Umfangs radial über die zweite Ankerscheibe 28 hinaus vorsteht. In axialer Richtung kann auf der von dem Elektromagneten 18 weg weisenden Stirnseite der ersten Ankerscheibe 20 ein Exzenterhebel angeordnet sein, welcher um eine zur zentralen Achse 26 vorzugsweise orthogonale und zur Erstreckungsebene der ersten Ankerscheibe 20 parallele Exzenterdrehachse schwenkbar ist. Durch eine Exzenterwelle kann der Exzenterhebel von außen drehbetätigbar sein. Durch Drehbetätigung gerät der Exzenterhebel schließlich in Anlage an die von dem Elektromagneten wegweisende Seite der ersten Ankerscheibe 20, so dass bei Erhöhung des auf die Exzenterwelle wirkenden Drehmoments eine auf die erste Ankerscheibe 20 wirkende axiale Kraft ausübbar ist, welche gegen die Vorspannkraft der Feststell-Vorspannfedern 22 wirkt, so dass die erste Ankerscheibe 20 durch Verdrehen der Exzenterhebel in ihre Inaktivstellung oder zumindest aus ihrer Aktivstellung bewegt werden kann.

Um ein Verkanten der ersten Ankerscheibe 20 bei der Notlüftung zu verhindern, können vorteilhafterweise mehrere Exzenterhebel um den Umfang der ersten Ankerscheibe 20 verteilt angeordnet sein, vorzugsweise paarweise einander axial (bezogen auf die zentrale Achse 26) gegenüberliegend. Sofern eine ungerade Anzahl an Exzenterscheiben vorgesehen ist, sollten diese zur Vermeidung eines Verkantens der ersten Ankerscheibe 20 bei der Notlüftung mit gleichem Winkelabstand voneinander längs des Umfangs der ersten Ankerscheibe 20 verteilt angeordnet sein.

Vorzugsweise ist der wenigstens eine Exzenterhebel festlegbar, so dass die erste Ankerscheibe 20 dann, wenn sie aus ihrer Aktivstellung durch den wenigstens Exzenterhebel herausbewegt worden ist, in der durch die beschriebene Notbelüftungsbetätigung erreichten Stellung aufgrund der Festlegung des wenigstens einen Exzenterhebels gehalten werden kann und die Exzenterhebel losgelassen werden können.

## Patentansprüche

1. Flurförderzeug mit wenigstens einem angetriebenen Rad, welches im Fahrbetrieb durch eine Betriebsbremse (28, 38, 42, 46, 48, 50) bremsbar ist und welches durch eine Feststellbremse (18, 20, 22) feststellbar ist, wobei das Flurförderzeug eine Bremskrafterzeugungs- und Bremskraftübertragungsvorrichtung (16, 32, 34, 36) umfasst, mit welcher eine Bremskraft erzeugbar und auf wenigstens ein Rad, vorzugsweise ein angetriebenes Rad, übertragbar ist,
wobei die Betriebsbremse (28, 38, 42, 46, 48, 50) mechanisch oder/ und pneumatisch oder/und hydraulisch betätigbar ist, wobei die Feststellbremse (18, 20, 22) elektromagnetisch betätigbar ist und das Flurförderzeug eine der Feststellbremse (18, 20, 22) zugeordnete erste Ankerscheibe (20) mit ferromagnetischem Material umfasst, welche bewegbar ist zwischen einer Aktivstellung, in welcher sie die Bremskrafterzeugungs- und Bremskraftübertragungsvorrichtung (16, 32, 34, 36) zur Erzeugung und Übertragung einer Bremskraft auf das wenigstens eine Rad aktiviert, und einer Inaktivstellung, in welcher sie die Bremskrafterzeugungs- und Bremskraftübertragungsvorrichtung (16, 32, 34, 36) nicht aktiviert, wobei das Flurförderzeug ferner eine der Betriebsbremse (28, 38, 42, 46, 48, 50) zugeordnete zweite Ankerscheibe (28) umfasst, welche verlagerbar ist zwischen einer Ineingriffsstellung, in welcher sie die Bremskrafterzeugungs- und Bremskraftübertragungsvorrichtung (16, 32, 34, 36) zur Erzeugung und Übertragung einer Bremskraft auf das wenigstens eine Rad aktiviert, und einer Außereingriffsstellung, in welcher sie die Bremskrafterzeugungs- und Bremskraftübertragungsvorrichtung (16, 32, 34, 36) nicht aktiviert,
**dadurch gekennzeichnet, dass** die zweite Ankerscheibe (28) nicht-ferromagnetisch ist.

2. Flurförderzeug nach Anspruch 1,
**dadurch gekennzeichnet, dass** ein und dieselbe Bremskrafterzeugungsund Bremskraftübertragungsvorrichtung (16, 32, 34, 36) sowohl der Betriebsbremse (28, 38, 42, 46, 48, 50) als auch der Feststellbremse (18, 20, 22) derart zugeordnet ist, dass sowohl eine Betätigung der Betriebsbremse (28, 38, 42, 46, 48, 50) als auch eine Betätigung der Feststellbremse (18, 20, 22) die Bremskrafterzeugungs- und Bremskraftübertragungsvorrichtung (16, 32, 34, 36) zur Erzeugung und Übertragung einer Bremskraft auf das wenigstens eine Rad aktiviert.

3. Flurförderzeug nach einem der vorhergehenden Ansprüche,
**dadurch gekennzeichnet, dass** es eine Feststell-Vorspanneinrichtung (22) umfasst, welche auf die erste Ankerscheibe (20) eine diese zur Aktivstellung hin vorspannende Feststell-Vorspannkraft ausübt.

4. Flurförderzeug nach Anspruch 3,
**dadurch gekennzeichnet, dass** der Feststellbremse (18, 20, 22) ein Elektromagnet (18) zugeordnet ist, welcher in seinem Bestromungszustand die erste Ankerscheibe (20) gegen die Feststell-Vorspannkraft der Feststell-Vorspanneinrichtung (22) in der Inaktivstellung hält.

5. Flurförderzeug nach einem der vorhergehenden Ansprüche,
**dadurch gekennzeichnet, dass** die erste (20) und die zweite Ankerscheibe (28) längs einer gemeinsamen Trajektorie (bei 26) bewegbar beziehungsweise verlagerbar sind, vorzugsweise koaxial angeordnet und längs der gemeinsamen Achse (26) bewegbar beziehungsweise verlagerbar sind.

6. Flurförderzeug nach Anspruch 5,
**dadurch gekennzeichnet, dass** die zweite Ankerscheibe (28) bei Betrachtung in Richtung der gemeinsamen Bewegungstrajektorie (bei 26) zwischen der Bremskrafterzeugungs- und Bremskraftübertragungsvorrichtung (16, 32, 34, 36) und der ersten Ankerscheibe (20) angeordnet ist.

7. Flurförderzeug nach einem der vorhergehenden Ansprüche,
**dadurch gekennzeichnet, dass** die erste Ankerscheibe (20) bei ihrer Bewegung von der Inaktivstellung in die Aktivstellung die zweite Ankerscheibe (28) von der Außereingriffsstellung zur Ineingriffsstellung hin verlagert.

8. Flurförderzeug nach einem der vorhergehenden Ansprüche,
**dadurch gekennzeichnet, dass** es eine Betriebs-Vorspanneinrichtung (48a, 50) umfasst, welche auf die zweite Ankerscheibe (28) eine diese zur Außereingriffsstellung hin vorspannende Betriebs-Vorspannkraft ausübt.

9. Flurförderzeug nach Anspruch 8,
**dadurch gekennzeichnet, dass** die Betriebs-Vorspanneinrichtung (48a, 50) an der ersten Ankerscheibe (20) abgestützt ist, so dass die auf die zweite Ankerscheibe (28) wirkende Betriebs-Vorspannkraft auf die erste Ankerscheibe (20) in Richtung zu deren Aktivstellung hin wirkt.

10. Flurförderzeug nach einem der vorhergehenden Ansprüche,
**dadurch gekennzeichnet, dass** es eine Notlüftungsvorrichtung (60) umfasst, mit welcher wenigstens die Feststellbremse (18, 20, 22) manuell gelüftet werden kann.

11. Flurförderzeug nach Anspruch 10,
**dadurch gekennzeichnet, dass** die Notlüftungsvorrichtung (60) eine die erste Ankerscheibe (20) durchsetzende und hintergreifende Stelleinrichtung (62, 64) umfasst, durch welche die erste Ankerscheibe (20) von außerhalb eines Bremsgehäuses (12), in welchem wenigstens die erste Ankerscheibe (20) aufgenommen ist, zumindest von der Aktivstellung in die Inaktivstellung bewegbar ist.

12. Flurförderzeug nach einem der vorhergehenden Ansprüche,
**dadurch gekennzeichnet, dass** wenigstens das durch die Betriebsbremse (28, 38, 42, 46, 48, 50) ausübbare Bremsmoment durch eine Überlastsicherung (46) betragsmäßig gegen übermäßig hohe Bremsmomente begrenzt ist.

13. Flurförderzeug nach Anspruch 12,
**dadurch gekennzeichnet, dass** es ein von einem Flurförderzeugführer zu betätigendes Betätigungselement (38) aufweist, durch welches ein mit der zweiten Ankerscheibe (28) in Kraftübertragungskopplung stehendes Aktuatorelement (42) verstellbar ist von einer Nichtbetätigungsstellung hin zu einer Betätigungsstellung.

14. Flurförderzeug nach Anspruch 13,
**dadurch gekennzeichnet, dass** die Überlastsicherung (46) eine Feder umfasst, welche kraftübertragungsmäßig zwischen dem Aktuatorelement (42) und der zweiten Ankerscheibe (28) angeordnet ist.

## Claims

1. Industrial truck with at least one driven wheel, which can be braked during travelling operation by means of a service brake (28, 38, 42, 46, 48, 50) and which can be immobilized by a parking brake (18, 20, 22), the industrial truck comprising a braking force generation and braking force transmission apparatus (16, 32, 34, 36), with which a braking force can be generated and can be transmitted to at least one wheel, preferably a driven wheel, the service brake (28, 38, 42, 46, 48, 50) being capable of being actuated mechanically and/or pneumatically and/or hydraulically, the parking brake (18, 20, 22) being capable of being actuated electromagnetically, and the industrial truck comprising a first armature disc (20), which is associated with the parking brake (18, 20, 22), has ferromagnetic material and is capable of being moved between an active position, in which it activates the braking force generation and braking force transmission apparatus (16, 32, 34, 36) for generating and transmitting a braking force to the at least one wheel, and an inactive position, in which it does not activate the braking force generation and braking force transmission apparatus (16, 32, 34, 36), the industrial truck furthermore comprising a second armature disc (28), which is associated with the service brake (28, 38, 42, 46, 48, 50) and which can be displaced between an engaged position, in which it activates the braking force generation and braking force transmission apparatus (16, 32, 34, 36) for generating and transmitting a braking force to the at least one wheel, and an out-of-engagement position, in which it does not activate the braking force generation and braking force transmission apparatus (16, 32, 34, 36), **characterized in that** the second armature disc (28) is non-ferromagnetic.

2. Industrial truck according to Claim 1,
**characterized in that** one and the same braking force generation and braking force transmission apparatus (16, 32, 34, 36) is associated with both the service brake (28, 38, 42, 46, 48, 50) and the parking brake (18, 20, 22) in such a way that both an actuation of the service brake (28, 38, 42, 46, 48, 50) and an actuation of the parking brake (18, 20, 22) activates the braking force generation and braking force transmission apparatus (16, 32, 34, 36) for generating and transmitting a braking force to the at least one wheel.

3. Industrial truck according to one of the preceding claims, **characterized in that** it comprises an immobilizing prestressing device (22), which exerts an parking prestressing force on the first armature disc (20) so as to prestress it towards the active position.

4. Industrial truck according to Claim 3,
**characterized in that** the parking brake (18, 20, 22) has an associated electromagnet (18), which, in its energized state, holds the first armature disc (20), counter to the parking prestressing force of the immobilizing prestressing device (22), in the inactive position.

5. Industrial truck according to one of the preceding claims, **characterized in that** the first (20) and the second armature disc (28) can be moved or displaced along a common trajectory (at 26), are preferably arranged coaxially and can be moved or displaced along the common axis (26).

6. Industrial truck according to Claim 5,
**characterized in that** the second armature disc (28), when viewed in the direction of the common movement trajectory (at 26), is arranged between the braking force generation and braking force transmission apparatus (16, 32, 34, 36) and the first armature disc (20).

7. Industrial truck according to one of the preceding claims, **characterized in that** the first armature disc (20), during its movement from the inactive position into the active position, displaces the second armature disc (28) from the out-of-engagement position to the engaged position.

8. Industrial truck according to one of the preceding claims, **characterized in that** it comprises a service prestressing device (48a, 50), which exerts a service prestressing force on the second armature disc (28) which prestresses it towards the out-of-engagement position.

9. Industrial truck according to Claim 8,
**characterized in that** the service prestressing device (48a, 50) is supported on the first armature disc (20), with the result that the service prestressing force acting on the second armature disc (28) acts on the first armature disc (20) in the direction towards its active position.

10. Industrial truck according to one of the preceding claims, **characterized in that** it comprises an emergency ventilation apparatus (60), with which at least the parking brake (18, 20, 22) can be ventilated manually.

11. Industrial truck according to Claim 10,
**characterized in that** the emergency ventilation apparatus (60) comprises a setting device (62, 64), which passes through and engages behind the first armature disc (20) and by means of which the first armature disc (20) can be moved, from outside a brake housing (12), in which at least the first armature disc (20) is accommodated, at least from the active position into the inactive position.

12. Industrial truck according to one of the preceding claims, **characterized in that** at least the braking torque which can be exerted by the service brake (28, 38, 42, 46, 48, 50) is limited in terms of absolute value by means of overload protection means (46) in order to prevent excessively high braking torques.

13. Industrial truck according to Claim 12,
**characterized in that** it has an actuating element (38), which is to be actuated by an industrial truck driver and by means of which an actuator element (42), which is coupled in force-transmitting fashion to the second armature disc (28), can be adjusted from a non-actuating position towards an actuating position.

14. Industrial truck according to Claim 13,
**characterized in that** the overload protection means (46) comprises a spring, which is arranged in force-transmitting fashion between the actuator element (42) and the second armature disc (28).

## Revendications

1. Chariot de manutention avec au moins une roue motrice, qui peut être freiné en marche par un frein de service (28, 38, 42, 46, 48, 50) et qui peut être bloqué par un frein de stationnement (18, 20, 22), le chariot de manutention comportant un dispositif de génération et de transmission de force de freinage (16, 32, 34, 36), avec lequel une force de freinage peut être générée et transmise à au moins une roue, de préférence une roue motrice,
le frein de service (28, 38, 42, 46, 48, 50) pouvant être actionné mécaniquement et/ou pneumatiquement et/ou hydrauliquement, le frein de stationnement (18, 20, 22) pouvant être actionné électromagnétiquement et le chariot de manutention comportant un premier disque d'induit (20) associé au frein de stationnement (18, 20, 22) avec du matériau ferromagnétique, qui peut être déplacé entre une position active, dans laquelle il active le dispositif de génération et de transmission de force de freinage (16, 32, 34, 36) pour la génération et la transmission d'une force de freinage à l'au moins une roue, et une position inactive, dans laquelle il n'active pas le dispositif de génération et de transmission de force de freinage (16, 32, 34, 36), le chariot de manutention comportant en outre un second disque d'induit (28) associé au frein de service (28, 38, 42, 46, 48, 50) qui peut être déplacé entre une position d'engrènement, dans laquelle il active le dispositif de génération et de transmission de force de freinage (16, 32, 34, 36) pour la génération et la transmission d'une force de freinage à l'au moins une roue, et une position de désengrènement, dans laquelle il n'active pas le dispositif de génération et de transmission de force de freinage (16, 32, 34, 36) , **caractérisé en ce que** le second disque d'induit (28) n'est pas ferromagnétique.

2. Chariot de manutention selon la revendication 1,
**caractérisé en ce qu'**un seul et même dispositif de génération et de transmission de force de freinage (16, 32, 34, 36) est associé au frein de service (28, 38, 42, 46, 48, 50) ainsi qu'au frein de stationnement (18, 20, 22) de telle sorte qu'un actionnement du frein de service (28, 38, 42, 46, 48, 50) ainsi qu'un actionnement du frein de stationnement (18, 20, 22) activent le dispositif de génération et de transmission de force de freinage (16, 32, 34, 36) pour la génération et la transmission d'une force de freinage à l'au moins une roue.

3. Chariot de manutention selon l'une quelconque des revendications précédentes,
**caractérisé en ce qu'**il comporte un dispositif de précontrainte de blocage (22) qui exerce sur le premier disque d'induit (20) une force de précontrainte de blocage précontraignant celui-ci vers la position active.

4. Chariot de manutention selon la revendication 3,
**caractérisé en ce qu'**au frein de stationnement (18, 20, 22) est associé un électroaimant (18) qui maintient dans son état d'activation, le premier disque d'induit (20) contre la force de précontrainte de blocage du dispositif de précontrainte de blocage (22) dans la position inactive.

5. Chariot de manutention selon l'une quelconque des revendications précédentes,
**caractérisé en ce que** le premier (20) et le second (28) disques d'induit peuvent être déplacés ou mobiles le long d'une trajectoire (au 26) commune, de préférence sont disposés coaxialement et peuvent être déplacés ou mobiles le long de l'axe (26) commun.

6. Chariot de manutention selon la revendication 5,
**caractérisé en ce que** le second disque d'induit (28) est disposé, en regardant en direction de la trajectoire de déplacement (au 26) commune, entre le dispositif de génération et de transmission de force de freinage (16, 32, 34, 36) et le premier disque d'induit (20).

7. Chariot de manutention selon l'une quelconque des revendications précédentes,
**caractérisé en ce que** le premier disque d'induit (20) déplace lors de son déplacement de la position inactive à la position active, le second disque d'induit (28) de la position de désengrènement à la position d'engrènement.

8. Chariot de manutention selon l'une quelconque des revendications précédentes,
**caractérisé en ce qu'**il comporte un dispositif de précontrainte de service (48a, 50) qui exerce sur le second disque d'induit (28), une force de précontrainte de service précontraignant celui-ci vers la position de désengrènement.

9. Chariot de manutention selon la revendication 8,
**caractérisé en ce que** le dispositif de précontrainte de service (48a, 50) est en appui sur le premier disque d'induit (20) de sorte que la force de précontrainte de service agissant sur le second disque d'induit (28) agisse sur le premier disque d'induit (20) en direction de sa position active.

10. Chariot de manutention selon l'une quelconque des revendications précédentes,
**caractérisé en ce qu'**il comporte un dispositif de ventilation d'urgence (60), avec lequel au moins le frein de stationnement (18, 20, 22) peut être ventilé manuellement.

11. Chariot de manutention selon la revendication 10,
**caractérisé en ce que** le dispositif de ventilation d'urgence (60) comporte un dispositif de réglage (62, 64) traversant et venant en prise derrière le premier disque d'induit (20), par lequel le premier disque d'induit (20) peut être déplacé de l'extérieur d'un carter de frein (12), dans lequel au moins le premier disque d'induit (20) est reçu, au moins de la position active à la position inactive.

12. Chariot de manutention selon l'une quelconque des revendications précédentes,
**caractérisé en ce qu'**au moins le couple de freinage pouvant être exercé par le frein de service (28, 38, 42, 46, 48, 50) est limité par un limiteur de charge (46) en volume contre des couples de freinage excessivement élevés.

13. Chariot de manutention selon la revendication 12,
**caractérisé en ce qu'**il présente un élément d'actionnement (38) à actionner par un conducteur de chariot de manutention, par lequel un élément actionneur (42) se trouvant en couplage de transmission de force avec le second disque d'induit (28) peut être réglé d'une position de non actionnement à une position d'actionnement.

14. Chariot de manutention selon la revendication 13,
**caractérisé en ce que** le limiteur de charge (46) comporte un ressort qui est disposé pour la transmission de force entre l'élément actionneur (42) et le second disque d'induit (28).
